# EUROPÄISCHE PATENTSCHRIFT

(11) **EP 0 701 505 B1**
(45) Veröffentlichungstag und Bekanntmachung des Hinweises auf die Patenterteilung: **18.09.1996**
(21) Anmeldenummer: 94916830.6
(22) Anmeldetag: 08.06.1994
(51) Int. Cl.: B29C 47/76

(54) **VORRICHTUNG ZUM ENTGASEN VON THERMOPLASTISCHEM KUNSTSTOFF**
DEVICE FOR DEGASSING THERMOPLASTICS
DISPOSITIF POUR LE DEGAZAGE D'UNE MATIERE SYNTHETIQUE THERMOPLASTIQUE

(30) Priorität: 08.06.1993 AT 1111/93; 01.03.1994 AT 433/94
(43) Veröffentlichungstag der Anmeldung: 20.03.1996
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.
(86) Internationale Anmeldenummer: AT9400075
(87) Internationale Veröffentlichungsnummer: WO9429097

(56) Entgegenhaltungen:
- EP-A- 0 102 400
- EP-A- 0 119 029
- WO-A-93/04841
- FR-A- 1 360 959
- GB-A- 927 501
- US-A- 3 360 824
- US-A- 3 684 252
- US-A- 4 186 047

## Beschreibung

Die Erfindung bezieht sich auf eine Vorrichtung zum Entgasen von thermoplastischem Kunststoff, der durch zumindest eine Einbringeöffnung in ein Gehäuse eines ersten Schneckenabschnittes eingebracht wird, an dessen Ende der plastifizierte Kunststoff in zumindest einen Verbindungskanal gedrückt wird, in dem zumindest ein Filter für den Kunststoff liegt, nach dessen Passieren der Kunststoff zu einer Einströmöffnung eines Gehäuse eines mit dem ersten Schneckenabschnitt gleichachsigen zweiten Schneckenabschnittes strömt, der den Kunststoff entlang eines mit zumindest einer Entgasungsöffnung versehenen Entgasungsbereiches zu einem Auslaß fördert, wobei zwischen den beiden Schneckenabschnitten ein dazwischenliegender, eine Umgehung des Verbindungskanales verhindernder Dichtungsabschnitt liegt, und die beiden Schneckenabschnitte und der Dichtungsabschnitt in, gleichen Durchmesser aufweisenden, Bohrungen der Gehäuse gelagert sind.

Eine derartige Vorrichtung ist aus einem älteren Vorschlag der Erfinder bekannt (WO 93/04841). Diese bekannte Vorrichtung ermöglicht es, thermoplastischen Kunststoff im plastifizierten Zustand mittels des Filters zu reinigen und sodann zu entgasen, ist jedoch heikel hinsichtlich der Anordnung der Öffnung, über welche das plastifizierte Kunststoffmaterial nach Passieren des Filters in den zweiten Schneckenabschnitt einströmt. Außerdem kommt es bei manchen Kunststoffsorten nur zu einer unvollständigen Entgasung, zumal das Kunststoffmaterial beim Durchströmen des Filters durchwirbelt wird, so daß Gaseinschlüsse in das Innere des Kunststoffstranges eingearbeitet werden. Untersuchungen der Anmelder haben gezeigt, daß die Probleme bei der Entgasung darauf zurückzuführen sind, daß im Entgasungsbereich der Migrationsweg für die Gasblasen zu lang ist. Eine Möglichkeit, dem entgegenzuwirken, besteht darin, daß die Schnecke im Entgasungsbereich langsamer laufen gelassen wird, so daß das Kunststoffmaterial den Entgasungsbereich verhältnismäßig langsam passiert. Dies hat jedoch den Nachteil, daß der Durchsatz der Vorrichtung unbefriedigend ist. Eine andere Möglichkeit besteht darin, den Entgasungsbereich verhältnismäßig lang zu bemessen, was den Nachteil bedingt, daß die Gesamtlänge der Vorrichtung beträchtlich wird.

Die Erfindung setzt sich zur Aufgabe, diese Nachteile zu vermeiden und bei einer Vorrichtung der eingangs geschilderten Art die Entgasung zu verbessern, ohne daß der Durchsatz der Vorrichtung wesentlich verringert wird und ohne daß die Baulänge der Vorrichtung erhöht wird. Die Erfindung löst diese Aufgabe dadurch, daß in Gehäuse des zweiten Schneckenabschnittes zwischen der Einströmöffnung und den Entgasungsöffnungen zumindest ein Staukörper für den Kunststoffstrom vorgesehen ist, welcher Staukörper den Kunststoffstrom in eine schlauchförmige Gestalt zwingt und relativ zur Einströmöffnung verstellbar ist, wobei der Staukörper so vor der Einströmöffnung liegt, daß der aus der Einströmöffnung in das Gehäuse des zweiten Schneckenabschnittes strömende Kunststoff direkt auf den Umfang des Staukörpers trifft, der in axialen Abstand vor der ihm am nächsten liegenden Entgasungsöffnung angeordnet ist und einen sich zum zweiten Schneckenabschnitt hin verjüngenden Querschnitt hat. Dieser Staukörper bildet zwischen seiner Mantelfläche und dem Innenmantel des Gehäuses des zweiten Schneckenabschnittes einen radialen Spalt, der in der Regel schmal ist, so daß durch diesen Spalt gleichsam ein schlauchförmiger Kunststoffilm mit geringer Wandstärke extrudiert wird. Dieser schlauchförmige Kunststoffstrom wird vom zweiten Schneckenabschnitt erfaßt und im Entgasungsbereich weitertransportiert, wobei die geringe Wandstärke dieses Kunststoffilmes einen kurzen Migrationsweg für die Gasblasen bedingt und derart eine wirksame Entgasung ermöglicht, auch wenn die Schnecke verhältnismäßig rasch läuft. Hiebei ist es von Vorteil, daß dem Bereich des Staukörpers bereits gefiltertes Kunststoffmaterial zugeführt wird, so daß Fremdkörper nicht zur Beeinträchtigung des zwischen dem Staukörper und dem Schneckengehäuse gebildeten Spaltes führen können. Anderseits wird der durch das Filter bewirkten Einarbeitung der Gaseinschlüsse wirksam entgegengewirkt, und zwar dadurch, daß das vom Filter her mit Gaseinschlüssen versehene Kunststoffmaterial nach der Wiedereinströmung in das Gehäuse des zweiten Schneckenabschnittes zunächst einmal den Staukörper umströmt und im wesentlichen erst dann durch die Schnecke des zweiten Schneckenabschnittes weitertransportiert wird. Diese Umströmung des Staukörpers bietet den Gaseinschlüssen eine längere Zeitdauer, sich vom Kunststoff zu lösen. Die für die Gaseinschlüsse zur Verfügung stehende Zeit, um vom Kunststoff freizukommen, wird daher verlängert, so daß auch verhältnismäßig langen Migrationswegen der Gaseinschlüsse Rechnung getragen wird.

Bei gattungsfremden Konstruktionen sind Staukörper bekannt, die den durch eine Schnecke zugeführten Kunststoffstrang in eine schlauchförmige Gestalt bringen, um die Entgasung zu begünstigen (DE-A 2,237.190, DE-A 2,031.935, EP-A 119.029). Bei den bekannten Konstruktionen ist jedoch keine Filterung des Kunststoffmateriales vorgesehen, so daß die der Erfindung zugrundeliegende Aufgabe dort gar nicht auftritt.

Im Prinzip können im Sinne der Erfindung mehrere Staukörper vorgesehen sein, die in Transportrichtung des Kunststoffes hintereinander angeordnet sind. Gegebenenfalls könnte auch ein aus mehreren Abschnitten zusammengesetzter Staukörper Verwendung finden. Vorzugsweise ist jedoch im Rahmen der Erfindung nur ein einziger Staukörper vorgesehen, welcher vom in das Gehäuse des zweiten Schneckenabschnittes eintretenden Kunststoff im Bereich der Einströmöffnung umströmt wird, so daß der Kunststoff in die schlauchförmige Gestalt übergeführt wird.

Gemäß einer bevorzugten Ausführungsform der Erfindung reichen die Schneckengänge des zweiten Schneckenabschnittes bis in den Bereich zwischen dem Staukörper und der ihm am nächsten liegenden Entgasungsöffnung, vorzugsweise schließen die Schneckengänge an den Staukörper unmittelbar an. Dadurch wird vermieden, daß der Kunststoffschlauch wieder zusammenfällt bzw. daß wesentliche Verdickungen des Kunststoffmateriales nach seiner Überführung in die schlauchförmige Gestalt auftreten können, wodurch die Entgasung behindert würde.

Durch Verstellung des Staukörpers in axialer Richtung der beiden Schneckenabschnitte läßt sich der wirksame Querschnitt der Einströmöffnung verändern, wenn der sich verjüngende Abschnitt des Staukörpers in den Bereich dieser Einströmöffnung gelangt. Die Verhältnisse bei der Bildung des schlauchförmigen Kunststoffilmes können daher nach Wunsch beeinflußt werden, insbesondere die Wandstärke dieses Filmes. Hiebei ist es im Rahmen der Erfindung besonders günstig, den sich verjüngenden Querschnitt des Staukörpers in Form eines konischen Abschnittes des Staukörpers auszubilden, d.h. als Kegelstumpfmantelfläche. Dies begünstigt einerseits die Lösung des Kunststoffilmes vom Staukörper, anderseits ergibt sich, wie bereits erwähnt, die Möglichkeit, bei Axialverschiebung des Staukörpers die radiale Breite des zwischen seinem Umfang und dem Innenmantel des Gehäuses des zweiten Schneckenabschnittes gebildeten Ringspaltes gleichmäßig kontinuierlich zu verändern. Hiebei ist es im Rahmen der Erfindung besonders günstig, wenn der Staukörper - in Strömungsrichtung des Kunststoffes gesehen - vor den Schneckengängen des zweiten Schneckenabschnittes mit dessen Kern verbunden ist. Der Staukörper dreht sich dann mit der benachbarten Schnecke mit, was die Verteilung des über die Einströmöffnung zufließenden Kunststoffes zur Schlauchform begünstigt. Außerdem ergibt sich hiedurch der Vorteil, die axiale Verschiebung des Staukörpers über die benachbarte Schnecke durchzuführen, wofür erfindungsgemäß die Anordnung so getroffen ist, daß der mit dem Staukörper verbundene zweite Schneckenabschnitt in seiner Axialrichtung verschiebbar ist, vorzugsweise mittels einer am Stirnende dieses Schneckenabschnittes angreifenden Schraube. Alternativ hiezu kann jedoch im Rahmen der Erfindung die Anordnung auch so getroffen sein, daß der Staukörper in Axialrichtung verschiebbar auf dem zweiten Schneckenabschnitt gelagert ist und mit einem gesonderten Verstelltrieb verbunden ist. Auch bei einer solchen Konstruktion läßt sich das Merkmal aufrechterhalten, daß sich der Staukörper mit dem benachbarten Schneckenabschnitt mitdreht.

Besonders günstig ist es im Rahmen der Erfindung, wenn der Staukörper lösbar mit dem zweiten Schneckenabschnitt verbunden und gegen Staukörper mit anderen Abmessungen austauschbar ist. Dadurch lassen sich die Verhältnisse an der Einströmöffnung nach Belieben ändern und den jeweiligen Materialerfordernissen anpassen.

Untersuchungen der Erfinder haben ferner gezeigt, daß Probleme dann auftreten können, wenn die Zerkleinerung des dem ersten Schneckenabschnitt zugeführten Kunststoffmaterial nur unvollkommen ist, so daß in diesem Material größere Kunststoffbrocken bzw. -fetzen verbleiben, die durch den ersten Schneckenabschnitt nur unvollkommen plastifiziert werden, bevor sie in den Verbindungskanal eingedrückt werden. Solche nicht vollständig plastifizierte Kunststoffanteile können den Verbindungskanal verlegen bzw. das in ihm eingebaute Filter blockieren. Dasselbe kann verursacht werden durch im Kunststoff enthaltene Fremdkörper, z.B. Metallteilchen oder Steine, Textilanteile usw. Eine solche Verlegung des Verbindungskanales bzw. Blockierung des Filters bewirkt einen Abfall des Kunststoffstromes im dem Filter nachgeschalteten Abschnitt des Verbindungskanales und somit auch in der den Kunststoff zum Staukörper führenden Einströmöffnung, wodurch die Bildung des Kunststoffschlauches beeinträchtigt oder zunichte gemacht werden könnte. Um diese Schwierigkeiten zu überwinden, ist gemäß einer Weiterbildung der Erfindung die Anordnung so getroffen, daß im, der Einlaßöffnung des Verbindungskanales benachbarten, Bereich des ersten Schneckenabschnittes die Schnecke mit das von ihr geführte Material zerkleinernden Zähnen versehen ist. Diese Zähne, welche mit dem ersten Schneckenabschnitt umlaufen, wirken zerkleinernd auf das vor dem Eintrittsende des Verbindungskanales befindliche Kunststoffmaterial sowie in die in ihm enthaltenen Verunreinigungen, also gerade an der kritischen Stelle. Durch die Zähne werden die unplastifizierten Kunststoffanteile sowie größere Fremdstoffanteile des in den Verbindungskanal eintretenden Materiales so zerkleinert, daß eine Verlegung dieses Kanales nicht mehr auftreten kann. Wenn die durch die Zerkleinerung erhaltenen Teilchen nicht so klein sind, daß sie das Filter passieren können, so fangen sie sich im Filter und werden beim Filterwechsel aus der Vorrichtung entfernt.

Gemäß einer erfindungsgemäßen Ausführungsvariante sind die Zähne mit dem Kern des Schneckenabschnittes einstückig ausgebildet. Sie sind also aus dem Material dieses Kernes ausgearbeitet. Herstellungsmäßig einfacher ist es jedoch gemäß einer bevorzugten Ausführungsform der Erfindung, wenn die Zähne auf einem mit dem Kern des Schneckenabschnittes drehschlüssig verbundenen, gesonderten Trägerstück vorgesehen sind. Dieses Trägerstück kann z.B. mit dem Kern des Schneckenabschnittes verschraubt sein.

Vorzugsweise sind im Rahmen der Erfindung die Zähne als Rippen ausgebildet, die sich bis zur Innenwand des Gehäuses des Schneckenabschnittes erstrecken. Diese Rippen wirken gleichsam mahlend auf das zu zerkleinernde Gut ein. Sie können parallel zur Achsrichtung des Schneckenabschnittes verlaufen, jedoch gegebenenfalls auch entlang von Schraubenlinien od. dgl., wodurch sich ein ziehender Schnitt auf das zu zerkleinernde Material ergibt. Besonders günstige Ergebnisse werden im Rahmen der Erfindung dann erzielt, wenn, in axialer Richtung des Schneckenabschnittes gesehen, die Zähne die Einlaßöffnung zur Gänze überlappen, vorzugsweise vorne und hinten mit Übermaß. Die Einlaßöffnung ist dann - in der Draufsicht gesehen - völlig durch die Zähne abgedeckt, wobei die Zähne mit der Kante der Einlaßöffnung zusammenwirken, welche Kante als Abscherkante wirkt. Um den dort auftretenden Beanspruchungen am besten Rechnung zu tragen, ist im Rahmen der Erfindung in die Wand der Einlaßöffnung ein Verschleißstück eingesetzt.

Weitere Kennzeichen und Vorteile der Erfindung ergeben sich aus der Beschreibung von Ausführungsbeispielen, welche in der Zeichnung schematisch dargestellt sind.

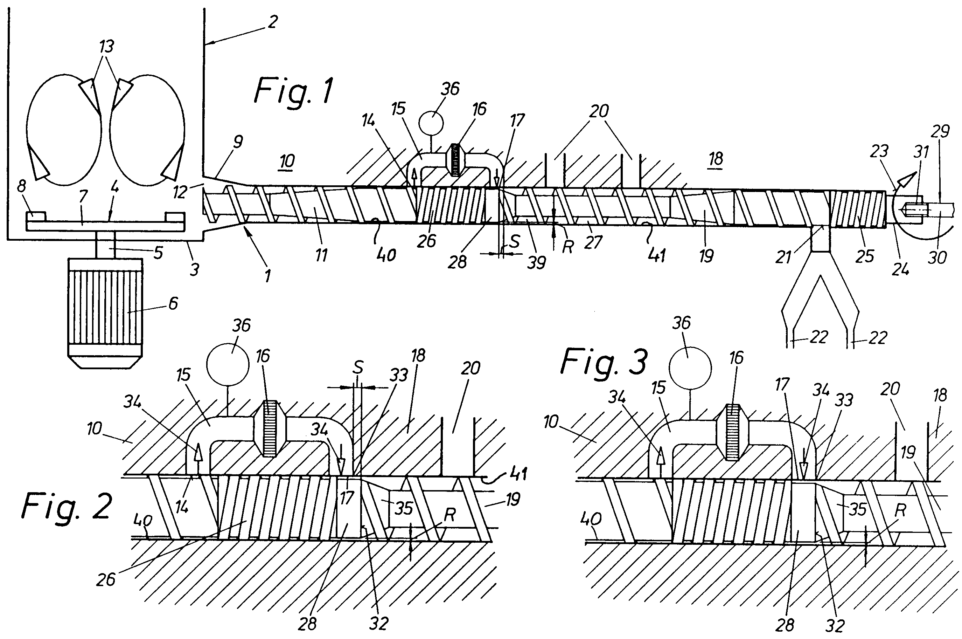

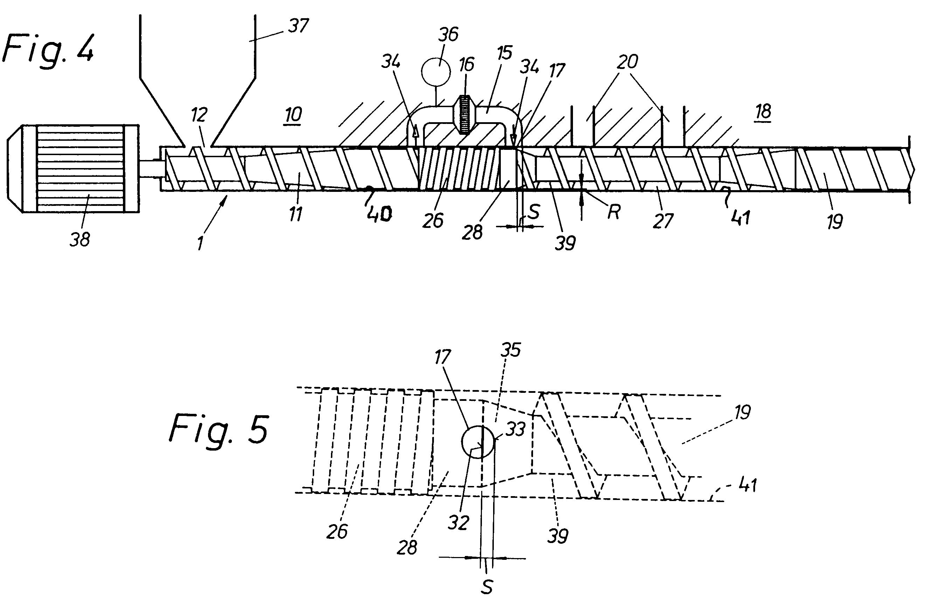

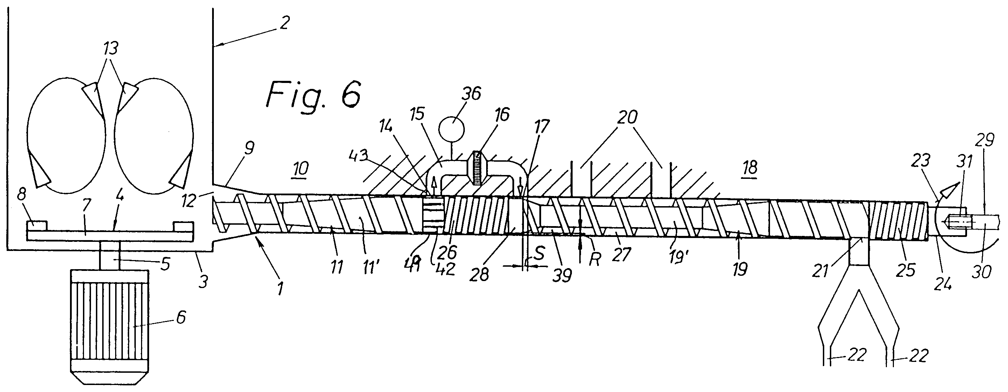

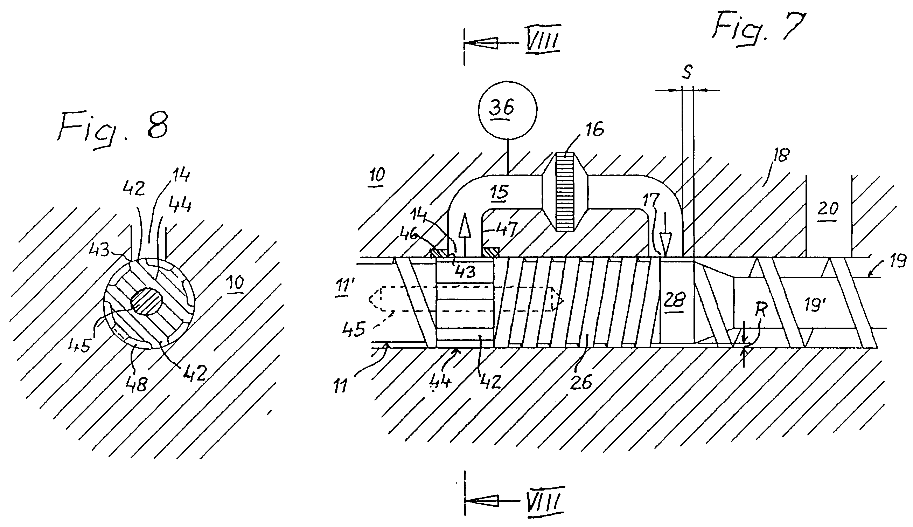

Fig.1 zeigt einen Längsschnitt durch ein erstes Ausführungsbeispiel. Fig.2 zeigt ein Detail der Fig.1 in größerem Maßstab und in einer gegenüber Fig.1 abweichenden Stellung des Staukörpers. Fig.3 zeigt, ähnlich wie Fig.2, in größerem Maßstab die Verhältnisse an der Einströmöffnung, in nochmals geänderter Stellung des Staukörpers. Fig.4 ist ein Axialschnitt durch eine Ausführungsvariante und Fig.5 ist ein Querschnitt durch die Einströmöffnung von Fig.1 in größerem Maßstab. Fig.6 zeigt ein weiteres Ausführungsbeispiel im Längsschnitt. Fig.7 zeigt in größerem Maßstab ein Detail einer Ausführungsvariante hiezu und Fig.8 ist ein Schnitt nach der Linie VIII-VIII der Fig.7.

Bei der Ausführungsform nach den Fig.1,2,3 und 5 hat die Vorrichtung 1 einen topfförmigen Behälter 2, in den das zu behandelnde Kunststoffgut oben eingefüllt wird. Im Bereich des Bodens 3 des Behälters 2 ist ein Werkzeug 4 in bekannter Weise um eine vertikale, mittig im Behälter 2 angeordnete Achse drehbar gelagert und zur Rotation über eine den Boden 3 durchsetzende Welle 5 von einem Motor 6 angetrieben. Das Werkzeug 4 hat zumindest zwei radiale Arme 7, die zweckmäßig als Schneidkanten ausgebildeten Arbeitskanten 8 für das Kunststoffmaterial versehen sind. Diese Arbeitskanten vermischen das zugeführte Kunststoffmaterial und führen gegebenenfalls auch eine Zerkleinerung desselben durch. Das so bearbeitete Kunststoffmaterial gelangt in einen Einzugstrichter 9 eines Gehäuses 10 eines ersten Schneckenabschnittes 11. Dieser Schneckenabschnitt 11 ragt in die vom Einzugsrichter 9 gebildete Öffnung 12 hinein. Bei der Drehung der Werkzeuge 4 um die Achse der Welle 5 steigt das im Behälter 2 umlaufende Kunststoffmaterial in Form einer Mischthrombe entlang den Behälterwänden 2 hoch, was durch Pfeile 13 angedeutet ist. Die auf das umlaufende Kunststoffmaterial ausgeübte Fliehkraft unterstützt den Einzug des Kunststoffmateriales durch die Öffnung 12 in das vorzugsweise annähernd radial an den Behälter 2 angeschlossene Gehäuse 10 der Schnecke 11. Statt dessen kann das Schneckengehäuse 10 auch etwa tangential an den Behälter 2 angeschlossen sein.

Der Kerndurchmesser des ersten Schneckenabschnittes 11 vergrößert sich in Richtung von der Öffnung 12 weg, wodurch das vom Schneckenabschnitt 11 eingezogene Kunststoffmaterial komprimiert und plastifiziert wird. Das plastifizierte Material tritt aus dem Gehäuse 10 des ersten Schneckenabschnittes 11 durch eine Öffnung 14 in einen Verbindungskanal 15 ein und strömt in diesem zu zumindest einem Filter 16, welches die in der Kunststoffschmelze enthaltenen Verunreinigungen herausfiltert. Zweckmäßig hat dieses Polymerfilter 16 rückspülbare und auswechselbare Filtereinsätze bzw. ist so ausgebildet, daß auch während des Rückspülvorganges bzw. während eines Siebwechsels ein kontinuierlicher Betrieb der Vorrichtung 1 möglich ist. Nach Passieren des Filters 16 gelangt das plastifizierte Kunststoffmaterial in einen weiteren Abschnitt des Verbindungskanales 15, welcher über eine Einströmöffnung 17 in das Innere eines weiteren Gehäuses 18 mündet, in welchem ein zweiter Schneckenabschnitt 19 drehbar gelagert ist. Dieser zweite Schneckenabschnitt 19 fördert das plastifizierte Kunststoffmaterial in einem Entgasungsbereich vorbei an zwei Entgasungsöffnungen 20, durch welche die aus dem Kunststoffmaterial ausgetretenen Gase abgeführt, gesammelt und gegebenenfalls einer weiteren Verwendung zugeführt werden können. Nach Passieren dieser Entgasungsöffungen 20 gelangt das Kunststoffmaterial zu einem Auslaß 21, an den Werkzeuge angeschlossen sein können, z.B. zu Formen oder Granuliereinrichtungen führende Extruderköpfe 22.

Zweckmäßig sind die beiden Schneckenabschnitte 11,19 in Bohrungen 40 bzw. 41 der beiden Gehäuse 10 bzw. 18 gelagert, welche Bohrungen relativ zueinander koaxial angeordnet sind und gleichen Durchmesser aufweisen. Die koaxiale Anordnung der beiden Schneckenabschnitte 11,19 ermöglicht es in einfacher Weise, diese beiden Schneckenabschnitte 11,19 zu einem einzigen Baukörper mit gemeinsamen Kern zu vereinigen und die beiden Schneckenabschnitte 11,19 von der Spitzenseite des zweiten Schneckenabschnittes 19 her gemeinsam anzutreiben, also von der in Fig.1 rechts liegenden Seite her. Die Umlaufrichtung der beiden Schneckenabschnitte 11,19 ist durch einen Pfeil 23 angedeutet. An einem Stummel 24 greift der nicht dargestellte Schneckenantrieb, z.B. mittels eines Zahnriemens, an. Zwischen dem Auslaß 21 und diesem Stummel 24 liegt ein weiterer Schneckenabschnitt 25 mit Schneckengängen, deren Steigung jener der beiden Schneckenabschnitte 11,19 entgegengesetzt ist, so daß dieser Schneckenabschnitt 25 eine Abdichtung nach außen bildet. Eine weitere, von einem Schneckenabschnitt 26 mit Schneckengängen entgegengesetzter Steigung gebildete Abdichtung liegt zwischen den beiden Schneckenabschnitten 11,19 und verhindert, daß Kunststoffmaterial unter Umgehung des Verbindungskanals 15 aus dem Gehäuse 10 direkt in das Gehäuse 18 gelangen kann.

Um die Entgasung des bearbeiteten Kunststoffmateriales im Gehäuse 18 zu begünstigen, hat der Schneckenabschnitt 19 im Bereich zwischen der Einströmöffnung 17 und der - in Strömungsrichtung des Kunststoffmateriales gesehen - letzten Entgasungsöffnung 20 eine Druckloszone 27, die von einem verringerten Kerndurchmesser des Schneckenabschnittes 19 gebildet ist. Nach der letzten Entgasungsöffnung 20 geht dieser verringerte Kerndurchmesser allmählich in den vollen Kerndurchmesser über, welcher im Bereich des Auslasses 21 vorliegt, um das Kunststoffmaterial wieder unter Druck und damit genügend plastifiziert zu halten.

Eine weitere Begünstigung der Entgasung ergibt sich dadurch, daß vor der Einströmöffnung 17 ein Staukörper 28 liegt, welcher dem Einströmen des Kunststoffmateriales aus der Einströmöffnung 17 in das Gehäuse 18 einen gewissen Widerstand entgegensetzt und das Kunststoffmaterial zwingt, am Beginn des Gehäuses 18 eine schlauchförmige Form anzunehmen. Der Außendurchmesser dieses Schlauches entspricht hiebei dem Innendurchmesser der Bohrung 41 des Gehäuses 18, in welchem der Schneckenabschnitt 19 gelagert ist. Der Innendurchmesser dieses Schlauches ist durch den Außendurchmesser des zylindrischen Staukörpers 28 definiert. Die Wandstärke dieses Schlauches ist bestimmt durch die Differenz der Radien des Staukörpers 28 und des Gehäuses 18 und hängt von den vorliegenden Gegebenheiten ab. Für einen Durchmesser des Gehäuses 18 von 100 mm ist es zweckmäßig, diese Wandstärke (Maß R in den Fig.1 bis 3) mit etwa 0,5 bis 3 mm zu wählen. Eine Änderung dieses Maßes R ist dadurch möglich, daß der Staukörper 28 auswechselbar und gegen andere Staukörper mit anderen Abmessungen austauschbar ist. Hiezu ist es zweckmäßig, die gesamte, von den Abschnitten 11,26,19,25 gebildete Schnecke nach rechts aus den Gehäusen 10,18 ausbauen zu können.

Eine Änderung der Verhältnisse und eine Anpassung an unterschiedliche Materialerfordernisse ist aber auch dadurch möglich, daß der Staukörper 28 zusammen mit den ihn tragenden Schneckenabschnitten in Axialrichtung der Schneckenabschnitte verstellbar ist. Hiezu dient eine am Stummel 24 angreifende Verstelleinrichtung 29 (Fig.1), zweckmäßig eine in axialer Richtung unverschiebbare Schraube 30, welche in ein Gewinde 31 des Stummels 24 einschraubbar ist. Durch Relativverdrehung der Schraube 30 in Bezug auf den Stummel 24 wird die gesamte, von den Schneckenabschnitten 11,26,19,25 gebildete Schneckenkonstruktion in axialer Richtung verstellt. Das Ausmaß dieser Verstellung braucht nur relativ gering zu sein, für eine Konstruktion mit einem Durchmesser des Gehäuses 18 von 100 mm empfiehlt sich ein Verstellweg von etwa 6 mm. Die Mittelstellung ist in Fig.3 dargestellt und so gewählt, daß die - in Strömungsrichtung des Kunststoffmateriales gesehen - vorne liegende Kante 32 des zylindrischen Staukörpers 28 bündig abschließt mit der Vorderkante 33 der Einströmöffnung 17. Das in Richtung der Pfeile 34 strömende Kunststoffmaterial wird somit gezwungen, nach dem Austritt aus der Einströmöffnung 17 den Staukörper 28 ringförmig zu umfließen, bevor es in den Bereich des Schneckenabschnittes 19 gelangt, in den der Staukörper 28 über einen konischen Abschnitt 35 übergeht.

Von dieser in Fig.3 dargestellten Mittelstellung kann - unter Zugrundelegung der obenerwähnten Maßverhältnisse - der Staukörper 28 nach beiden Richtungen um etwa 3 mm verlagert werden. Die Verlagerung nach links ist in Fig.1 dargestellt, in welcher Lage zwischen der Kante 32 des Staukörpers 28 und der Vorderkante 33 der Einströmöffnung 17 ein Spalt S (Fig.5) verbleibt, durch den das Material freier als in Fig.3 in das Innere des Gehäuse 18 strömen kann, so daß die Wandstärke des gebildeten Kunststofffilmes sich vergrößert.

In Fig.2 ist die andere Extremstellung dargestellt, in welcher die Kante 32 des Staukörpers 28 die Vorderkante 33 der Einströmöffnung 17 um das Maß S überschliffen hat. Hier muß also der sich rings um den Staukörper 28 bildende Kunststoffschlauch erst zumindest um das Maß S in Axialrichtung der Schnecke 19 strömen, bevor der so gebildete schlauchförmige Film in den Bereich des konischen Abschnittes 35 gelangt.

In allen Fällen bewirkt die geringe Wandstärke des schlauchförmigen Kunststoffilmes, daß der Migrationsweg für die im Kunststoff eingeschlossenen Gasblasen sehr klein ist, so daß alle Gasblasen aus dem Kunststoff austreten, bevor der Kunststoff an der letzten Entgasungsöffnung 20 vorbeigefördert worden ist. Außerdem beirkt der Umstand, daß bei der Bildung des Kunststoffschlauches der über die Einströmöffnung 17 eintretende Kunststoff zunächst den Staukörper 28 umströmen muß, eine Verlängerung der Zeitspanne, welche für die Gaseinschlüsse zur Verfügung steht, an die Oberfläche des Kunststoffes zu gelangen. Auf diese Weise wird eine sichere Entgasung des Kunststoffes gewährleistet. Zweckmäßig schließen die Schneckengänge des zweiten Schneckenabschnittes 19 an den zylindrischen Abschnitt des Staukörpers 28 an, sind also auch im Bereich des komischen Abschnittes 35 des Staukörpers vorhanden. Damit wird gewährleistet, daß der Kunststoffschlauch sofort nach seiner Bildung von den Schneckengängen erfaßt und verläßlich weitertransportiert wird.

Zweckmäßig liegt die Einströmöffnung 17 nahe dem rechten Rand des die Dichtung bewirkenden Schneckenabschnittes 26, gegebenenfalls so, daß dieser Schneckenabschnitt 26 den linken Rand der Einströmöffnung 17 geringfügig übergreift, was in Fig.2 für die rechte Extremstellung des Staukörpers 28 dargestellt ist. Dadurch wird gewährleistet, daß der Schneckenabschnitt 26 laufend mit filtriertem Kunststoffmaterial aus der Einströmöffnung 17 versorgt wird, so daß verhindert wird, daß dieser Schneckenabschnitt 26 trocken läuft, wodurch die Dichtwirkung dieses Abschnittes beeinträchtigt werden könnte.

Gegebenenfalls könnte mehr als ein Staukörper 28 vorgesehen sein, wenngleich in der Regel ein einziger Staukörper 28 genügt.

Der Staukörper 28 bewirkt eine Drosselung des Einstromes des Kunststoffmateriales durch die Einströmöffnung 17 in das Gehäuse des Schneckenabschnittes 19. Es kann daher dort nie zur Überfüllung der Druckloszone 27 kommen, so daß ein Kunststoffaustritt durch die Entgasungsöffnungen 20 mit Sicherheit vermieden ist, solange das Kunststoffmaterial hinreichend durch den Auslaß 20 abströmen kann.

Die Einstellbarkeit bzw. Austauschbarkeit des Staukörpers 28 ermöglicht es auch, die Druckverhältnisse im Verbindungskanal 15 nach Wunsch zu beeinflussen. Zur Messung und Überprüfung dieses Druckes ist an den Verbindungskanal 15 ein Druckfühler 36 angeschlossen, zweckmäßig vor dem Filter 16. Durch diesen Druckfühler 36 ist auch der Verschmutzungsgrad des Filters 16 überprüfbar.

Vom Schneckenabschnitt 19 muß nach der Entgasung lediglich der Widerstand der Extruderköpfe 22, an welche z.B. Granulierwerkzeuge angeschlossen sein können, überwunden werden. Es kann daher mit einer kurzen, tief geschnittenen und daher nur wenig unnütze Energie verbrauchenden Schnecke für den Schneckenabschnitt 19 gearbeitet werden.

Bei der Ausführungsform nach Fig.4 ist die Befüllung und der Antrieb der Schnecke unterschiedlich zu der Ausführungsform nach den Fig.1 bis 3. Gemäß Fig.4 ist das Gehäuse 10 an seinem linken Ende oben mit der Einbringeöffnung 12 versehen, an die ein Einfülltrichter 37 für das gegebenenfalls vorzerkleinerte, Kunststoffmaterial angeschlossen ist. Der Antrieb der zu einem einzigen Baukörper vereinigten Schneckenabschnitte 11,26,19 erfolgt vom linken Ende her, also vom Einfüllende mittels eines Motors 38. Ansonsten kann die Konstruktion im wesentlichen wie in Fig.1 gezeigt ausgebildet sein.

Die erfindungsgemäße Konstruktion eignet sich zur Entgasung gashältiger thermoplastischer Kunststoffe aller Art, insbesondere für geschäumte Polystyrole, z.B. "Styropor" (registriertes Warenzeichen), aber auch zur Entgasung solcher Kunststoffe, die bei Erwärmung zur Gasbildung neigen, z.B. bedruckte und verunreinigte Kunststoffe.

Wie bereits erwähnt, ist auch durch eine Austauschbarkeit des Staukörpers 28 eine Anpassung an unterschiedliche Beschaffenheiten des zu verarbeitenden Kunststoffmateriales möglich. Insbesondere wird es sich hiebei um Staukörper 28 mit unterschiedlichen Durchmessern handeln. Diese Staukörper sind mit den benachbarten Schneckenabschnitten 26,19 in geeigneter Weise, z.B. mittels Gewindezapfen, dreh- und zugschlüssig verbunden.

Es wäre auch möglich, den Staukörper 28 verschiebbar auf dem zweiten Schneckenabschnitt 19 zu lagern und ihn mit einem gesonderten Verstelltrieb zu verbinden, mit welchem die Lage des Staukörpers 28 relativ zu dem der Einströmöffnung 17 benachbarten Stirnende des zweiten Schneckenabschnittes 19 geändert werden kann. Eine hiezu geeignete Konstruktion kann darin bestehen, daß die Schneckenwelle des zweiten Schneckenabschnittes 19 als Hohlwelle ausgebildet ist, in welcher eine Verstellstange geführt ist, die mit dem verschiebbar auf den Schneckenabschnitt 19 aufgesetzten Staukörper 28 verbunden ist. Dies kann dadurch realisiert werden, daß der den Staukörper 28 tragende Endabschnitt der Schneckenwelle des Schneckenabschnittes 19 mit einem Längsschlitz versehen ist, welcher von einem Zapfen durchsetzt ist, der den Staukörper 28 mit der Verstellstange verbindet.

Um zu verhindern, daß der Verbindungskanal 15 zuwächst, insbesondere durch Ablagerung grober Verunreinigungen, z.B. Nägel, Steinchen usw., ist gemäß der Ausführungsform nach Fig.6 der der Einlaßöffnung 14 des Kanales 15 benachbarte Bereich 49 des ersten Schneckenabschnittes 11 als mit diesem Schneckenabschnitt koaxialer Fräser ausgebildet, d.h. mit Zähnen 42 versehen, welche diese groben Verunreinigungen soweit zerkleinern, daß ein Zuwachsen des Kanales 15 nicht mehr zu befürchten ist. Die zerkleinerten Verunreinigungen gelangen vielmehr zum Filter 16, wo sie aus der plastifizierten Kunststoffmasse ausgefiltert werden. Gemäß der Ausführungsform nach Fig.1 sind die Zähne 42 dieses Fräsers einstückig aus dem Material des Kernes 11' des Schneckenabschnittes 11 gefertigt. Die Zähne 42 liegen mit ihren Schneiden parallel zur Längsachse des Schneckenabschnittes 11, und diese Schneiden sind länger als der Durchmesser der Einlaßöffnung 14, so daß - in axialer Richtung der Schneckenabschnitte 11, 19 gesehen - die Zähne 42 die Einlaßöffnung 14 überlappen und davor und dahinter vorstehen. Damit wird gesichert, daß auch bei einer axialen Verschiebung des Schneckenabschnittes 11 die Zähne 42 voll wirksam bleiben. Mit diesen Zähnen 42 wirkt der scharfkantige Rand 43 der Einlaßöffnung 14 als Gegenschneide zusammen, dieser Rand 43 bildet also gleichsam eine Abscherkante.

Die Ausführungsform nach den Fig.7 und 8 unterscheidet sich von jener nach Fig.6 vor allem dadurch, daß die in Form von Längsrippen ausgebildeten Zähne 42 (Fig.3) nicht einstückig aus dem Material des kernes 11' des Schneckenabschnittes 11 ausgearbeitet sind, sondern auf einem gesonderten Trägerstück 44 sitzen, das mit dem Kern 11' des Schneckenabschnittes 11 bzw. mit dem Kern des mittleren Schneckenabschnittes 26 verschraubt ist. Diese Verschraubung 45 ist so gestaltet, daß sie sich bei der Drehung der Schneckenabschnitte 11,19 im Betrieb nicht lösen kann. Weiters ist, um die Abnützung des die Abscherkante bildenden Randes 43 möglichst gering zu halten, in die Wand 47 der Öffnung 14 ein Verschleißstück 46 eingesetzt, welches den als Abscherkante wirkenden Rand 43 bildet.

Wie Fig.8 zeigt, können die die Zähne 42 bildenden Rippen verhältnigsmäßig breit sein, um die auftretenden Scherkräfte problemlos aufnehmen zu können. Das Verhältnis der Breiten (in Umfangsrichtung gemessen) der Zähne 42 zu den dazwischen liegenden Nuten 48 kann innerhalb weiter Grenzen gewählt werden, im dargestellten Ausführungsfall liegt dieses Verhältnis bei 1:2.

## Patentansprüche

1. Vorrichtung zum Entgasen von thermoplastischem Kunststoff, der durch zumindest eine Einbringeöffnung (12) in ein Gehäuse (10) eines ersten Schneckenabschnittes (11) eingebracht wird, an dessen Ende der plastifizierte Kunststoff in zumindest einen Verbindungskanal (15) gedrückt wird, in dem zumindest ein Filter (16) für den Kunststoff liegt, nach dessen Passieren der Kunststoff zu einer Einströmöffnung (17) eines Gehäuses (18) eines mit dem ersten Schneckenabschnitt (11) gleichachsigen zweiten Schneckenabschnittes (19) strömt, der den Kunststoff entlang eines mit zumindest einer Entgasungsöffnung (20) versehenen Entgasungsbereiches zu einem Auslaß (21) fördert, wobei zwischen den beiden Schneckenabschnitten (11, 19) ein dazwischenliegender, eine Umgehung des Verbindungskanales (15) verhindernder Dichtungsabschnitt (26) liegt, und die beiden Schneckenabschnitte (11, 19) und der Dichtungsabschnitt (26) in, gleichen Durchmesser aufweisenden, Bohrungen (40,41) der Gehäuse (10, 18) gelagert sind, dadurch gekennzeichnet, daß im Gehäuse (18) des zweiten Schneckenabschnittes (19) zwischen der Einströmöffnung (17) und den Entgasungsöffnungen (20) zumindest ein Staukörper (28) für den Kunststoffstrom vorgesehen ist, welcher Staukörper (28) den Kunststoffstrom in eine schlauchförmige Gestalt zwingt und relativ zur Einströmöffnung (17) verstellbar ist, wobei der Staukörper (28) so vor der Einströmöffnung (17) liegt, daß der aus der Einströmöffnung (17) in das Gehäuse (18) des zweiten Schneckenabschnittes (19) strömende Kunststoff direkt auf den Umfang des Staukörpers (28) trifft, der im axialen Abstand vor der ihm am nächsten liegenden Entgasungsöffnung (20) angeordnet ist und einen sich zum zweiten Schneckenabschnitt (19) hin verjüngenden Querschnitt hat.

2. Vorrichtung nach Anspruch 1, dadurch gekennzeichnet, daß die Schneckengänge des zweiten Schneckenabschnittes (19) bis in den Bereich zwischen dem Staukörper (28) und der ihm am nächsten liegenden Entgasungsöffnung (20) reichen, vorzugsweise an den Staukörper (28) unmittelbar anschließen bzw. an dessen Mantelfläche enden.

3. Vorrichtung nach Anspruch 1 oder 2, dadurch gekennzeichnet, daß der sich verjüngende Querschnitt des Staukörpers (28) in Form eines konischen Abschnittes (35) des Staukörpers (28) ausgebildet ist.

4. Vorrichtung nach Anspruch 1,2 oder 3, dadurch gekennzeichnet, daß der Staukörper (28) - in Strömungsrichtung des Kunststoffes gesehen - vor den Schneckengängen des zweiten Schneckenabschnittes (19) mit dessen Kern verbunden ist.

5. Vorrichtung nach Anspruch 4, dadurch gekennzeichnet, daß der mit dem Staukörper (28) verbundene zweite Schneckenabschnitt (19) in seiner Axialrichtung verschiebbar ist, vorzugsweise mittels einer am Stirnende dieses Schneckenabschnittes (19) angreifenden Schraube (30).

6. Vorrichtung nach einem der Ansprüche 1 bis 4, dadurch gekennzeichnet, daß der Staukörper (28) in Axialrichtung verschiebbar auf dem zweiten Schneckenabschnitt (19) gelagert ist und mit einem gesonderten Verstelltrieb verbunden ist.

7. Vorrichtung nach einem der Ansprüche 1 bis 6, dadurch gekennzeichnet, daß der Staukörper (28) lösbar mit dem zweiten Schneckenabschnitt (19) verbunden und gegen Staukörper mit anderen Abmessungen austauschbar ist.

8. Vorrichtung nach einem der Ansprüche 1 bis 7, dadurch gekennzeichnet, daß der Staukörper (28) einen kreiszylindrischen Abschnitt hat, der mit der Wand des benachbarten Gehäuses (18) des zweiten Schneckenabschnittes (19) einen Spalt von 0,5 bis 3 mm einschließt.

9. Vorrichtung nach einem der Ansprüche 1 bis 8, dadurch gekennzeichnet, daß - in Strömungsrichtung des Kunststoffes gesehen - die Vorderkante (32) des Staukörpers (28) mit der Vorderkante (33) der Einströmöffnung (17) bündig abschließt oder von dieser Lage um bis zu 3 mm nach vorne oder hinten abweicht.

10. Vorrichtung nach einem der Ansprüche 1 bis 9, dadurch gekennzeichnet, daß im der Einlaßöffnung (14) des Verbindungskanales (15) benachbarten Bereich (49) des ersten Schneckenabschnittes (11) die Schnecke mit das von ihr geführte Material zerkleinernden Zähnen (42) versehen ist.

11. Vorrichtung nach Anspruch 10, dadurch gekennzeichnet, daß die Zähne (42) mit dem Kern (11') des Schneckenabschnittes (11) einstückig sind.

12. Vorrichtung nach Anspruch 10, dadurch gekennzeichnet, daß die Zähne (42) auf einem mit dem Kern (11') des Schneckenabschnittes (11) drehschlüssig verbundenen, gesonderten Trägerstück (44) vorgesehen sind.

13. Vorrichtung nach einem der Ansprüche 10 bis 12, dadurch gekennzeichnet, daß die Zähne (42) als Rippen ausgebildet sind, die sich bis zur Innenwand des Gehäuses (10) des Schneckenabschnittes (11) erstrecken.

14. Vorrichtung nach Anspruch 13, dadurch gekennzeichnet, daß die Rippen parallel zur Achsrichtung des Schneckenabschnittes (11) verlaufen.

15. Vorrichtung nach einem der Ansprüche 10 bis 14, dadurch gekennzeichnet, daß in axialer Richtung des Schneckenabschnittes gesehen, die Zähne (42) die Einlaßöffnung (14) zur Gänze überlappen, vorzugsweise vorne und hinten mit Übermaß.

16. Vorrichtung nach Anspruch 15, dadurch gekennzeichnet, daß in die Wand (47) der Einlaßöffnung (14) ein Verschleißstück (46) eingesetzt ist.

## Claims

1. A device for de-gassing thermoplastic material which is introduced by means of at least one feed opening (12) into a housing (10) of a first screw portion (11), at the end of which the plasticized plastics material is pressed into at least one connecting duct (15) in which at least one filter (16) for the plastics material is situated, after passing which the plastics material flows to an inflow opening (17) of a housing (18) of a second screw portion (19) which is coaxial with the first screw portion (11) and which conveys the plastics material to an outlet (21) along a de-gassing area provided with at least one de-gassing opening (20), wherein an interposed sealing portion (26) preventing the by-passing of the connecting duct (15) is arranged between the two screw portions (11, 19), and the two screw portions (11, 19) and the sealing portion (26) are mounted in bores (40, 41) in the housings (10, 18) having the same diameter, **characterized in that** at least one baffle barrier (28) for the plastics-material flow is provided in the housing (18) of the second screw portion (19) between the inflow opening (17) and the de-gassing openings (20), the said baffle barrier (28) forcing the plastics-material flow into a tube-like shape and being displaceable relative to the inflow opening (17), wherein the baffle barrier (28) is situated upstream of the inflow opening (17) in such a way that the plastics material flowing out of the inflow opening (17) into the housing (18) of the second screw portion (19) strikes the periphery of the baffle barrier (28) directly, the said baffle barrier (28) being arranged at an axial distance upstream of the de-gassing opening (20) situated closest thereto and having a cross-section which tapers towards the second screw portion (19).

2. A device according to Claim 1, **characterized in that** the threads of the second screw portion (19) extend as far as into the region between the baffle barrier (28) and the degassing opening (20) closest thereto, and preferably directly adjoin the baffle barrier (28) or terminate at the external surface thereof.

3. A device according to Claim 1 or 2, **characterized in that** the tapering cross-section of the baffle barrier (28) is constructed in the form of a conical portion (35) of the baffle barrier (28).

4. A device according to Claim 1, 2 or 3, **characterized in that** the baffle barrier (28) - as viewed in the direction of flow of the plastics material - is connected to the core of the second screw portion (19) in front of the threads thereof.

5. A device according to Claim 4, **characterized in that** the second screw portion (19) connected to the baffle barrier (28) is displaceable in its axial direction, preferably by means of a bolt (30) engaging on the front end of the said screw portion (19) (Fig. 1).

6. A device according to one of Claims 1 to 4, **characterized in that** the baffle barrier (28) is mounted on the second screw portion (19) so as to be displaceable in the axial direction and is connected to a separate displacement drive.

7. A device according to one of Claims 1 to 6, **characterized in that** the baffle barrier (28) is releasably connected to the second screw portion (19) and can be replaced with baffle barriers of different dimensions.

8. A device according to one of Claims 1 to 7, **characterized in that** the baffle barrier (28) has a cylindrical portion which with the wall of the adjacent housing (18) of the second screw portion (19) forms a gap of from 0·5 to 3 mm.

9. A device according to one of Claims 1 to 8, **characterized in that** - as viewed in the direction of flow of the plastics material - the front edge (32) of the baffle barrier (28) terminates flush with the front edge (33) of the inflow opening (17) or deviates from this position by up to 3 mm to the front or the rear.

10. A device according to one of Claims 1 to 9, **characterized in that** in the region (49) of the first screw portion (11) adjacent to the inlet opening (14) of the connecting duct (15) the screw is provided with teeth (42) which crush the plastics material conveyed by it.

11. A device according to Claim 10, **characterized in that** the teeth (42) are integral with the core (11') of the screw portion (11).

12. A device according to Claim 10, **characterized in that** the teeth (42) are provided on a separate carrier member (44) connected to the core (11') of the screw portion (11) in a rotationally fixed manner.

13. A device according to one of Claims 10 to 12, **characterized in that** the teeth (42) are constructed as ribs extending as far as the inner wall of the housing (10) of the screw portion (11).

14. A device according to Claim 13, **characterized in that** the ribs extend parallel to the axial direction of the screw portion (11).

15. A device according to one of Claims 10 to 14, **characterized in that** - as viewed in the axial direction of the screw portion - the teeth (42) completely overlap the inlet opening (14), preferably with an excess in front and to the rear.

16. A device according to Claim 15, **characterized in that** a wearing member (46) is inserted in the wall (47) of the inlet opening (14).

## Revendications

1. Dispositif pour le dégazage d'une matière synthétique thermoplastique introduite via au moins un orifice d'admission (12) dans une enveloppe (10) d'un premier élément de vis sans fin (11), à l'extrémité duquel la matière synthétique à plastifier est refoulée dans au moins un canal de liaison (15), équipé d'au moins un filtre (16) à matière synthétique, en aval duquel la matière synthétique s'écoule en direction d'un orifice d'introduction (17) d'une enveloppe (18) d'un second élément de vis sans fin (19) monté coaxialment au premier élément de vis sans fin (11) et déplaçant la matière synthétique en direction d'une sortie (21), le long d'une zone de dégazage dotée d'au moins un orifice de dégazage (20), un élément d'étanchéité (26) intermédiaire empêchant tout contournement du canal de liaison (15) étant prévu entre les deux éléments de vis sans fin (11, 19), et les deux éléments de vis sans fin (11, 19) et l'élément d'étanchéité (26) étant montés sur palier dans des alésages (40, 41) de même diamètre de l'enveloppe (10, 18), caractérisé en ce qu'il est prévu, dans l'enveloppe (18) du second élément de vis sans fin (19), entre l'orifice d'introduction (17) et les orifices de dégazage (20), au moins un corps de laminage (28) du flux de matière synthétique, lequel corps de laminage (28) extrude le flux de matière synthétique sous une forme tubulaire et est monté réglable en position par rapport à l'orifice d'introduction (17), le corps de laminage (28) étant agencé devant l'orifice d'introduction (17) de façon que la matière synthétique s'écoulant depuis l'orifice d'introduction (17) dans l'enveloppe (18) du second élément de vis sans fin (19) parvienne directement sur la circonférence dudit corps de laminage (28), qui se trouve à distance axialement en amont de l'orifice de dégazage (20) le plus proche et présente une section qui diminue en direction du second élément de vis sans fin (19).

2. Dispositif selon la revendication 1, caractérisé en ce que l'ailette du second élément de vis sans fin (19) s'étend jusqu'à la zone située entre le corps de laminage (28) et l'orifice de dégazage (20) le plus proche et de préférence est directement jointive avec le corps de laminage (28) ou se termine au niveau de sa surface externe.

3. Dispositif selon la revendication 1 ou 2, caractérisé en ce que la section de corps de laminage (28) qui diminue se présente sous la forme d'un élément conique (35) du corps de laminage (28).

4. Dispositif selon la revendication 1, 2 ou 3, caractérisé en ce que le corps de laminage (28) - vu dans le sens d'écoulement de la matière synthétique - est relié au moyeu du second élément de vis sans fin (19) en amont de l'ailette de la vis sans fin de ce dernier.

5. Dispositif selon la revendication 4, caractérisé en ce que le second élément de vis sans fin (19) relié au corps de laminage (28) peut être déplacé axialement, de préférence au moyen d'une vis (30) engageant l'extrémité frontale dudit élément de vis sans fin (19) (fig. 1).

6. Dispositif selon la revendication 1 à 4, caractérisé en ce que le corps de laminage (28) est monté libre de se déplacer axialement sur le second élément de vis sans fin (19) et en ce qu'il est relié à un mécanisme de déplacement indépendant.

7. Dispositif selon la revendication 1 à 6, caractérisé en ce que le corps de laminage (28) est relié de manière amovible au second élément de vis sans fin (19) et peut être remplacé par des corps de laminage de dimensions différentes.

8. Dispositif selon l'une quelconque des revendications 1 à 7, caractérisé en ce que le corps de laminage (28) présente une section cylindrique circulaire distante de 0,5 à 3 mm de la paroi de l'enveloppe voisine (18) du second élément de vis sans fin (19).

9. Dispositif selon l'une quelconque des revendications 1 à 8, caractérisé en ce que - vue dans le sens d'écoulement de la matière synthétique - l'arête avant (32) du corps de laminage (28) est jointive avec l'arête avant (33) de l'orifice d'introduction (17) ou s'écarte de cette position d'au plus 3 mm vers l'avant ou vers l'arrière.

10. Dispositif selon l'une quelconque des revendications 1 à 9, caractérisé en ce que, dans la zone (49) du premier élément de vis sans fin (11), voisine de l'orifice d'admission (14) du canal de liaison (15), ladite vis sans fin est dotée de dents (42) broyant le matériau qu'elle transporte.

11. Dispositif selon la revendication 10, caractérisé en ce que les dents (42) sont réalisées d'un seul tenant avec le moyeu (11') de l'élément de vis sans fin (11).

12. Dispositif selon la revendication 10, caractérisé en ce que les dents (42) sont prévues sur un élément support (44) indépendant, solidaire en rotation du moyeu (11') de l'élément de vis sans fin (11).

13. Dispositif selon l'une des revendications 10 à 12, caractérisé en ce que les dents (42) se présentent sous la forme de nervures qui s'étendent jusqu'à la paroi interne de l'enveloppe (10) de l'élément de vis sans fin (11).

14. Dispositif selon la revendication 13, caractérisé en ce que les nervures sont parallèles à l'axe de l'élément de vis sans fin (11).

15. Dispositif selon l'une des revendications 10 à 14, caractérisé en ce que, vues dans la direction axiale de l'élément de vis sans fin, les dents (42) recouvrent entièrement l'orifice d'admission (14) et dépassent de préférence vers l'arrière et vers l'avant dudit orifice.

16. Dispositif selon la revendication 15, caractérisé en ce qu'une pièce d'usure (46) est rapportée dans la paroi (47) de l'orifice d'admission (14).
